# EUROPEAN PATENT SPECIFICATION

(11) **EP 1 760 957 B1**
(45) Date of publication and mention of the grant of the patent: **26.05.2010**
(21) Application number: 05814648.1
(22) Date of filing: 30.11.2005
(51) Int. Cl.: H04L 12/56, H04L 12/24, H04Q 3/00

(54) **A METHOD FOR DISTRIBUTING RESOURCES OF BEARER NETWORK**
EIN VERFAHREN ZUR VERTEILUNG VON RESOURCEN EINES TRÄGERNETZWERKS
PROCEDE DE DISTRIBUTION DE RESSOURCES DE RESEAU SUPPORT

(30) Priority: 02.12.2004 CN 200410095575
(43) Date of publication of application: 07.03.2007
(73) Proprietor: Huawei Technologies Co., Ltd., Longgang District, Shenzhen Guangdong 518129 (CN)
(72) Inventor: CHEN, Yuepeng, Shenzhen, Guangdong 518129 (CN); FAN, Lingyuan, Shenzhen, Guangdong 518129 (CN); WU, Dengchao, Shenzhen, Guangdong 518129 (CN); LV, Zhenzhu, Shenzhen, Guangdong 518129 (CN); XU, Bo, Shenzhen, Guangdong 518129 (CN)
(74) Representative: Kreuz, Georg Maria
(86) International application number: PCT/CN2005/002062
(87) International publication number: WO 2006/058497

(56) References cited:
- WO-A-02/05501
- WO-A-2004/043024
- WO-A1-02/05501
- CN-A- 1 499 853
- CN-A- 1 523 834
- GB-A- 2 399 257
- US-A1- 2002 087 699
- ROB NEILSON ET AL: "A Discussion of Bandwidth Broker Requirements for Internet2 Qbone Deployment Version 0.7" IEEE INTERNET DRAFT, August 1999 (1999-08), pages 1-30, XP002186975
- CHIMENTO P ET AL: "QBONE SIGNALING DESIGN TEAM FINAL REPORT" INTERNET CITATION, [Online] 9 July 2002 (2002-07-09), pages 1-44, XP002396433 Retrieved from the Internet: URL:http://qos.internet2.edu/wg/documents- informational/20020709-chimento etal-qbone-signaling/> [retrieved on 2006-08-23]
- IBRAHIM TANER OKUMUS ET AL: "INTER-DOMAIN LSP SETUP USING BANDWIDTH MANAGEMENT POINTS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 1 OF 6, 25 November 2001 (2001-11-25), pages 7-11, XP001090208 ISBN: 0-7803-7206-9

## Description

### Field of the Technology

The present invention relates to a field of network communication technology, and more particularly, to a method for allocating bearer network resources.

### Background of the Invention

With the development of the Internet, various techniques of Quality of Services (QoS) are emerging, e.g., Internet Engineering Task Force (IETF) has proposed a large number of service models and systems to satisfy the needs of network development. Among such models, an IETF-proposed solution of using an Int-Serv (Integrated Service) Model between access points and edge points of a network and using a Different Service (Diff-Serv) Model in core points of the network has been highly ratified in this field. However, because the Diff-Serv Model in the solution ensures the QoS only by setting priorities, the transmission reliability and performance of the whole network can hardly be guaranteed although a network adopting such a solution features high efficiency of line utilization.

To solve this problem, a solution of introducing an independent bearer control layer to the Diff-Serv Model is proposed, i.e., a Diff-Serv Model with an independent bearer control layer has been proposed based upon the original Diff-Serv Model. This solution is to set a bearer control layer between the service control layer and bearer network layer in the Diff-Serv Model, wherein the bearer network layer includes multiple bearer network resource managers.

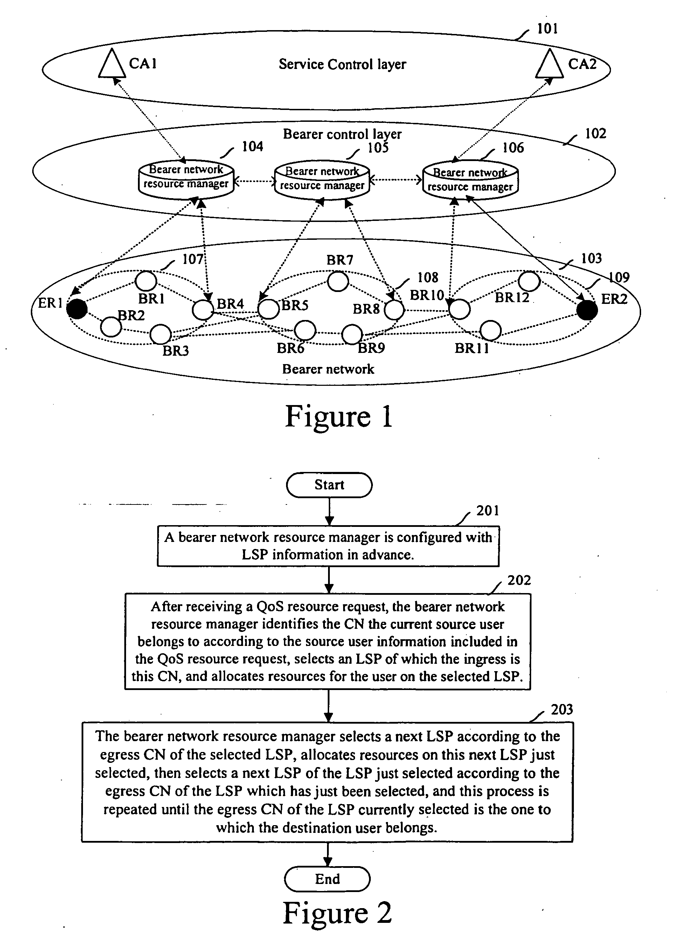

Further description is hereinafter given to the Diff-Serv Model with an independent bearer control layer with reference to Figure 1.

In the Diff-Serv Model with an independent bearer control layer as depicted in Fig. 1, there is a bearer control layer 102 between a bearer network 103 and a service control layer 101. A Call Agent (CA) in the service control layer 101 is an application server. A bearer network resource manager in the bearer control layer 102 is configured with administration rules and network topologies, and used to allocate service QoS resources for a user. Some information, including a QoS resource request and response thereof, LSP path information of media flow, and etc., are exchanged via signaling protocol among bearer network resource managers (e.g. bearer network resource managers 104, 105, and 106 in Fig. 1). Each bearer network resource manager in the bearer control layer 102 manages one specific bearer network region in the bearer network 103, which is called a management area of the bearer network resource manager (Note: a management area is a sub-domain in a large operator network or a domain of small operator network, and for brevity, a management area in the description hereinafter is referred to as domain.). Therefore, in Fig. 1, the management area of the bearer network resource manager 104 is identified by 107, while that of the bearer network resource manager 105 is identified by 108, and that of the bearer network resource manager 106 is identified by 109. The bearer network 103 may include Edge Routers (ER), Border Routers (BR), and Core Routers, all of which are uniformly called Connection Nodes (CN).

At present, the method used by a bearer network resource manager for acquiring route information and allocating bearer network resources is shown in Fig. 2, with detailed process as follows:
Step 201: A bearer network resource manager is configured with LSP information in advance. Such configuration of LSP information may be accomplished by either of the methods, wherein, one method is that route nodes in the bearer network report the LSP information created or/and updated by the route nodes themselves to a bearer network resource manager in a real time manner, and the bearer network resource manager saves the received LSP information; and the other method is that LSP information is pre-configured statically in the route nodes based on a network topology, and each route node sends the pre-configured LSP information to a bearer network resource manager after establishing a connection with it.
Step 202: After receiving a QoS resource request, the bearer network resource manager locates the Home CN of the source user according to the source user information contained in the QoS resource request, then selects an appreciate LSP of which the ingress is the located CN based on the information of the CN, and allocates resources for the user on the selected LSP.
Step 203: The bearer network resource manager selects a next LSP according to the egress CN of the selected LSP, allocates resources on this next LSP just selected, then selects a next LSP of the next LSP just selected according to the egress CN of the LSP which has just been selected, and this process is repeated until the egress CN of the LSP currently selected is the one to which the current destination user belongs.

As seen from the solution mentioned above, in the related art, a bearer network resource manager can only select LSP path information and allocate resources hop by hop. In this way, the requirements for operators to allocate resources based on some special routing policy and make a certain type of services pass the designated route nodes may not meet. In addition, the operator is unable to plan the network based on service characteristics, which may result in unreasonable network planning.

GB-A-2399257 discloses a method for providing guaranteed QoS in an IP network and a system thereof.

ROB NEILSON ET AL: "A Discussion of Bandwidth Broker Requirements for Internet2 Obone Deployment Version 0.7" IEEE INTERNET DRAFT presents requirements for a Bandwidth Broker (BB), as defined within the context of the Internet2 Qbone Bandwidth Broker Advisory Council. The requirements defined here are meant to provide guidelines for implementation of BBs to provide the QoS specified in [QBONEARCH].

### Summary

The technique provides a method for allocating bearer network resources according to some embodiments of the present invention, so that resources can be allocated by a routing policy.

An embodiment of the present invention provides a method for allocating bearer network resources, implemented in at least one bearer network resource manager, each of which corresponds to a domain, the method including:
upon receiving a QoS resource request, each bearer network resource manager deciding whether the destination user of the QoS resource request is an intra-domain user, if the destination user is the intra-domain user, selecting an intra-domain LSP of at least one hop, allocating resources on the selected intra-domain LSP, and terminating the current procedure, and if the destination user is not the intra-domain user, performing the following process:
the bearer network resource manager selecting an inter-domain sub-route according to a pre-configured inter-domain routing policy and the service information contained in the QoS resource request, determining an LSP attribute for the inter-domain sub-route, and selecting an inter-domain LSP between the bearer network resource manager and the adjacent downstream bearer network resource manager thereof according to the determined LSP attribute and the service information contained in the QoS resource request, and allocating resources on the selected inter-domain LSP;
selecting an intra-domain LSP of at least one hop, and allocating resources on the selected intra-domain LSP, and
sending the QoS resource request containing the information of the selected inter-domain LSP to the downstream bearer network resource manager, to which the egress router of the selected inter-domain LSP belongs.

As shown in the above solution, according to some embodiments of the present invention, when a bearer network resource manager receives a QoS resource request and allocates resources, inter-domain LSPs are selected according to the pre-configured routing policy, resources are then allocated on the selected LSPs such that operators can allocate resources based on appropriate routing policy.

Furthermore, according to some embodiments, routing policy between management areas and all the corresponding sub-routes thereof are determined according to service information so that different routing policy may be adopted in different services, and it is possible for an operator to plan the network according to services' characteristics, which may increase the rationality of network planning.

Moreover, according to some embodiments, in order to provide separation and security of a specific service, the bearer network resource manager can select an appropriate LSP path according to the pre-configured LSP attribute information of the sub-route table. Resources may be allocated on the LSPs with some special attributes in the procedure of distributing resources for some special services by means of selecting LSPs according to the LSP attributes pre-configured in the sub-routes, and a special service may pass a designated network node by means of setting the attribute of an LSP as a special connection node and selecting the LSP that passes the special connection node when allocating resources for the service.

Besides, during the resource allocation in accordance with some embodiments, intra-domain resources may be allocated according to a routing policy by first selecting a sub-route in the local domain according to an intra-domain routing policy, then selecting an LSP based on the LSP attributes and service information in the sub-route, and finally allocating resources on the selected LSP.

### Brief Introduction to Figures

Figure 1 is a schematic drawing of a Diff-Serv Model structure with an independent bearer control layer in the prior art;
Figure 2 is a flow chart of a method for allocating bearer network resources in the related art;
Figure 3 is a flow chart of an embodiment in accordance with the present invention.

### Description of the Embodiments

Further detailed descriptions about this invention are given with reference to the accompanying drawings.

The main process according some embodiments of the invention is that: after receiving a QoS resource request, each bearer network resource manager determines whether the destination user of this QoS resource request is an intra-domain user, if yes, the bearer network resource manager selects an intra-domain LSP according to the information in the QoS resource request and allocates resources for the user on the selected intra-domain LSP; otherwise, the bearer network resource manager performs the following process: selecting an inter-domain LSP according to its pre-configured inter-domain routing policy and allocating resources for the user on the selected inter-domain LSP, selecting an intra-domain LSP according to the selected inter-domain LSP and the information contained in the QoS resource request and allocating resources on the selected intra-domain LSP, and finally, sending a QoS resource request with information of the selected inter-domain LSP to a downstream bearer network resource manager to which the egress router of the selected inter-domain LSP belongs.

The method of selecting an inter-domain LSP according to the pre-configured inter-domain routing policy may include: first selecting an inter-domain sub-route according to the pre-configured inter-domain routing policy, and then selecting an inter-domain LSP according to the pre-configured LSP attributes of the inter-domain sub-route and service information contained in the QoS resource request.

Besides, an intra-domain LSP can also be selected according to the pre-configured intra-domain routing policy.

Further description of an embodiment of this invention is given as follows.

In this embodiment, a route analysis table, a route table, and a sub-route table are pre-configured in a bearer network resource manager of a bearer control layer. The route analysis table is for storing each user's network address information, Home type, intra-domain Home ER, inter-domain route identity, and the corresponding relationships thereof, so that the bearer network resource manager is able to acquire a user's Home type according to the user's IP address. For example, the user's network segment can be identified according to the user's IP address by using a method of the longest matching, and then the user's Home type can be determined according to the identified user's network segment; if the Home type of a source user or destination user obtained from the table is intra-domain, the intra-domain Home ER of the source user or destination user can be further determined; and if the Home type of the source user or destination user obtained from the table is extra-domain, an inter-domain route identity can be determined. The route analysis table is depicted as Table 1.

**Table 1**

| User network address information | User's Home type | Intra-domain ER | Inter-domain route identity |
|---|---|---|---|
| 204.145.0.0 | extra-domain | | RT12 |
| 192.168.0.0 | intra-domain | ER1 | |
| 202.123.0.0 | extra-domain | | RT3 |
| ..... | ...... | ...... | ...... |

The route table is for selecting sub-routes according to routing policy, including inter-domain route identities, routing policies, sub-route identities, and etc. As shown in Table 2, if a routing policy is polling, sub-routes 1, 2, and etc should be selected in turn; if a routing policy is priority, sub-routes should be selected based upon the priority of each sub-route, e.g., supposing that the priority of PRI1 is higher than that of PRI2, the sub-route of the Route3, SRT3a, should be selected first. Besides, the priorities of the sub-routes may be omitted in this table while the arrangement order of the sub-routes is used to indicate the priorities, based upon which selection can be performed, e.g., the priority of an anterior sub-route is higher while that of a posterior one is lower.

**Table 2**

| Inter-domain Route identity | Routing policy | Sub-route identity 1 | | Sub-route identity 2 | | ..... |
|---|---|---|---|---|---|---|
| RT12 | Polling | SRT1201 | | SRT1202 | | ...... |
| Route3 | Priority | SRT3a | PRI1 | SRT3b | PRI2 | ...... |
| ..... | ...... | ...... | | ...... | | ...... |

The sub-route table is used to constrain a group of LSPs with a common attribute, including sub-route identities, intra-domain Trunk Provide Edge (TPE) identities, and extra-domain TPE identities as depicted in Table 3. In the procedure of searching an LSP attribute in the sub-route table, the searching condition is that the ingress of the LSP is an intra-domain TPE and the egress of the LSP is an extra-domain TPE. As there are multiple LSPs that can meet such a condition while the bandwidths or/and traffic parameters of such LSPs may be different, service information should be considered in LSP selection.

**Table 3**

| Sub-route identity | Intra-domain TPE identity | Extra-domain TPE identity |
|---|---|---|
| SRT1201 | BR4 | BR5 |
| SRT1202 | BR4 | BR6 |
| ...... | ...... | ...... |

Both intra-domain TPEs and extra-domain TPEs shown in Table 3 are LSP attributes. In fact, other LSP attributes can also be configured in the sub-route table such as connection nodes, bandwidth information, traffic parameters, and etc, which can be flexibly conducted according to the operator's demand. If the sub-route table contains multiple LSP attributes, Table 3 may include sub-route identities and bandwidth information, or contain sub-route identities, route nodes, bandwidth information, and etc.

The inter-domain route identities in Table 1 are corresponding to those in Table 2 while the sub-route identities in Table 2 correspond to those in Table 3.

The route analysis table, route table, and sub-route table may be configured in a bearer network resource manager of the bearer control layer by the operator during network planning, and may be updated later. In the procedure of configuration or updating, the operator may use policies flexibly, as explained in the following examples.

When the destination user's Home type is extra-domain, if the routing policy of this service required by the operator is polling, and the service is required to pass a specific network node in the local domain, i.e. BR4, the corresponding relationship of the destination user's network address information and its inter-domain route identity will be set in the route analysis table first; then the routing policy of this inter-domain route will be set as polling in the route table; and thereafter, sub-routes will be configured respectively; and finally the intra-domain TPEs of the sub-routes will be set as BR4 in the sub-route table. In this way, after the above configurations, route selection for a user could be implemented according to the intra-domain TPE and extra-domain TPE finally determined by the rout analysis table, route table, and sub-route table, thereby satisfying the requirement of this specific type of services, that is, the routing policy is polling and the services pass the BR4.

Further description is hereinafter given to the resource allocating method based on the above configurations, wherein the Diff-Serv Model with an independent bearer control layer depicted in Figure 1 is taken as an example.

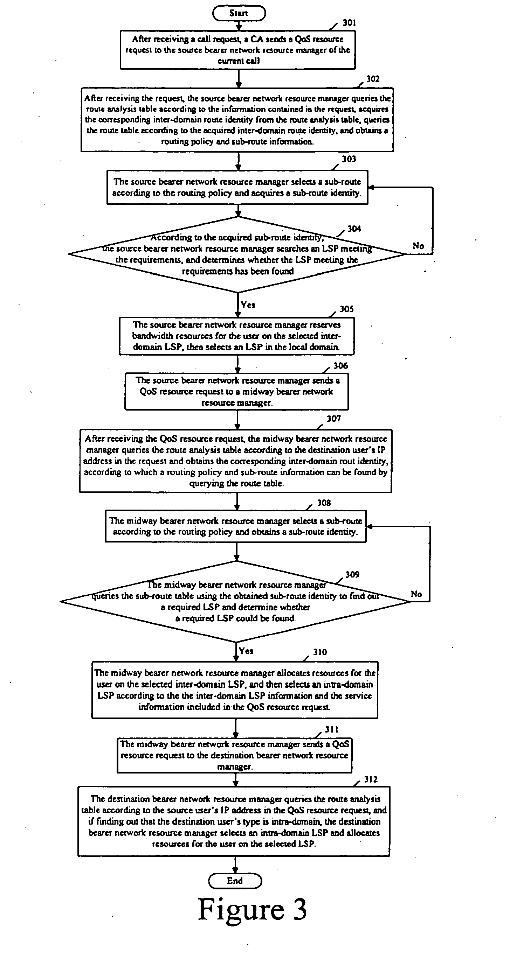

In Figure 1, the bearer network resource manager 105 can be called a midway bearer network resource manager of this call, for the reason that, if the bearer network resource manager 104 is the source bearer network resource manager of a QoS resource request while the bearer network resource manager 106 is the destination bearer network resource manager of this QoS resource request, the bearer network resource manager 105 would be the one passed by this QoS resource request besides the source and destination bearer network resource managers. Obviously, it is possible that a QoS resource request is processed within one bearer network resource manager, or transmitted from the source bearer network resource manager directly to the destination bearer network resource manager, or forwarded by one or more midway bearer network resource managers besides the source and destination bearer network resource managers. In this embodiment, there is only one midway bearer network resource manager between the source and destination bearer network resource managers. The procedure of allocating resources for the user in the process of service execution is depicted in Figure 3, with the specific process as follows:
Step 301: After receiving a call request, a CA sends a QoS resource request to the source bearer network resource manager of the current call.

The source bearer network resource manager is a resource manager of the source user's network. Service information contained in the QoS resource request includes quintets, QoS parameters, service type, and etc, wherein the quintets may include the source user's IP address, the source port number, the destination user's IP address, the destination port number, and protocol type; the QoS parameters may include traffic information and bandwidth requirement information; and the service type may be voice service, video service, or etc.
Step 302: After receiving the request, the source bearer network resource manager queries the route analysis table according to the destination user's IP address contained in the request and finds out that the user's Home type corresponding to the network segment to which the destination user's IP address belongs is extra-domain. Then, the source bearer network resource manager obtains the corresponding inter-domain route identity from the route analysis table, queries the route table according to the obtained inter-domain route identity, and obtains a routing policy and sub-route information.

In this step, if the destination user's Home type is not extra-domain, the ER to which the source user belongs and the ER to which the destination user belongs would be directly identified according to the service information, and the LSP meeting the requirement of the service information would then be selected, wherein the LSP's ingress is the source user's ER and its egress is the destination user's ER. Moreover, if there is specific routing-policy requirement in the domain, intra-domain LSP can also be identified by the following method: acquiring the intra-domain route identity through querying the intra-domain route analysis table first, then determining the intra-domain sub-route identity by querying the intra-domain route table according to the acquired intra-domain route identity and intra-domain routing policy, and then selecting an LSP by querying the intra-domain sub-route table according to this intra-domain sub-route identity. This method is the same as the one adopted for determining an inter-domain LSP except for some slight differences on the configuration of the intra-domain route analysis table and intra-domain sub-route table, that is, the source user's ER, destination user's ER, intra-domain route identity, and their corresponding relationships should be included in the intra-domain route analysis table. Thus, the corresponding intra-domain route identity can be acquired by querying this intra-domain route analysis table according to the source user's ER and destination user's ER. The intra-domain TPEs and extra-domain TPEs may be route nodes or some other LSP attributes. Refer to Steps 302, 303, and 304 for the specific implementation of the procedure described here.
Step 303: The source bearer network resource manager selects a sub-route according to the routing policy and acquires a sub-route identity.
Step 304: The source bearer network resource manager searches the sub-route table according to the acquired sub-route identity and obtains an intra-domain TPE and an extra-domain TPE, and searches the LSP meeting the requirements according to the obtained intra-domain TPE and extra-domain TPE as well as the QoS parameters and service type contained in the QoS resource request received by the source bearer network resource manager. Thereafter, determine whether the LSP meeting the requirements has been found, wherein the LSP refers to an inter-domain LSP, if yes, forward Step 305; otherwise, go back to Step 303.

Suppose that in Step 302, the source user's IP address is 204.145.12.123. By querying the route analysis table, conclusions can be made that the network segment which this IP address belongs to is 204.145.0.0, the corresponding user's Home type is extra-domain, and the inter-domain router identity is RT12. Then in Step 303, through querying the route table according to the RT12, the routing policy is known as polling, and the sub-routes include the SRT1201 and SRT1202. As the routing policy here is polling, the sub-routes are determined by polling. For example, if the SRT 1202 was selected as a sub-route in the last polling, then the sub-route selected this time would be the SRT1201. In Step 304, according to the SRT 1201, LSP attributes which include the BR4 and BR5 would be acquired from the sub-route table, and then search for LSPs based upon the service information and the condition that the ingress CN is BR4 and the egress CN is BR5. If an LSP meeting the requirements is found, resources would be allocated for the user on this LSP, otherwise, go back to the route table to acquire the sub-route identity, SRT1202, obtain the corresponding LSP attributes which include the BR4 and BR6 according to the SRT1202, and then search the LSP based on the service information and the condition that the ingress CN is BR4 and the egress CN is BR6. If an LSP meeting the requirements can be found, resources would be allocated on the found LSP; otherwise, go back to the route table to choose another sub-route.
Step 305: The source bearer network resource manager reserves bandwidth resources for the user on the selected inter-domain LSP, then selects a path in the local domain which can satisfy both the requirement of the service information in the QoS resource request and the condition that the ingress is the source user's Home CN and the egress thereof is the ingress CN of the inter-domain LSP, and allocates resources for the users on the selected path. The path selected here, of which the ingress is the source user's CN and the egress is the ingress CN of the above inter-domain LSP, may be an LSP or a path connected by multiple hops of LSP.

Similar to the method of selecting an intra-domain LSP after determining that the destination user's Home type is not extra-domain in Step 302, in this step, when there are specific routing-policy demands in the local domain, the intra-domain LSP could be determined by the process of: querying the intra-domain route analysis table to get the intra-domain sub-route identity, and searching the intra-domain route table according to the acquired intra-domain route identity and intra-domain routing policy, which can then be used to query the intra-domain sub-route table to select the intra-domain LSP. However, note that the intra-domain route analysis table is queried here by using the above inter-domain LSP's ingress CN as the destination user's Home ER.
Step 306: The source bearer network resource manager sends a QoS resource request to a midway bearer network resource manager. The QoS resource request contains quintets, QoS parameters, information of the LSP selected by the source bearer network resource manager, and service type, wherein the information of the LSP selected by the source bearer network resource manager includes an inter-domain LSP label and egress router address.
Step 307: After receiving the QoS resource request, the midway bearer network resource manager queries the route analysis table according to the destination user's IP address in the request. If the destination user's Home type is extra-domain, the corresponding inter-domain route identity would be acquired from the route analysis table, and a routing policy and sub-route information can be found by querying the route table according to the acquired inter-domain route identity.
Step 308: The midway bearer network resource manager selects a sub-route according to the routing policy and obtains a sub-route identity.
Step 309: The midway bearer network resource manager queries the sub-route table by using the obtained sub-route identity, and determines the intra-domain TPE and extra-domain TPE. Then the determined TPEs as well as the information like QoS parameters and service type contained in the QoS resource request from the source bearer network resource manager can be used to search for the required LSP and determine whether the required LSP could be found. If the LSP meeting the requirements could be found, wherein the LSP in this step refers to inter-domain LSP, forward Step 310; otherwise, go back to Step 308.
Step 310: The midway bearer network resource manager allocates resources for the user on the selected inter-domain LSP, and then selects an intra-domain LSP according to the inter-domain LSP information and service information contained in the QoS resource request, wherein the inter-domain LSP information in the QoS resource request primarily refers to the inter-domain LSP's egress router address. The method for selecting an intra-domain LSP is similar to that in Step 305 except that, when there are specific routing-policy demands and it is needed to query the intra-domain route analysis table, the egress router of the inter-domain LSP in the QoS resource request is taken as the source user's Home ER while the ingress router of the inter-domain LSP selected by the midway bearer network resource manager is taken as the destination user's Home ER.

Suppose that, from Step 307 to Step 309, the LSP's ingress selected by the midway bearer network resource manager is BR9 while the egress thereof is BR10, and the LSP's ingress selected in Step 310 is BR6 while the egress thereof is BR9.
Step 311: The midway bearer network resource manager sends to the destination bearer network resource manager a QoS resource request which contains quintets, information of the LSP selected by the midway bearer network resource manager, QoS parameters, and service type, wherein the information of the LSP selected by the midway bearer network resource manager includes the inter-domain LSP label and the egress CN.

Obviously , there might be several midway bearer network resource managers between the source and destination bearer network resource managers. In this case, before performing Step 311, the midway bearer network resource manager first sends a QoS resource request to another midway bearer network resource manager, then executes Step 307 to Step 310 repeatedly until the upstream midway bearer network resource manager connected to the destination bearer network resource manager has finished the inter-domain and intra-domain LSP selections, and after that, the upstream midway bearer network resource manager connected to the destination bearer network resource manager sends the QoS resource request to the destination bearer network resource manager.
Step 312: The destination bearer network resource manager queries the route analysis table according to the source user's IP address in the QoS resource request, and if finding out that the destination user's Home type is intra-domain, the destination bearer network resource manager selects an intra-domain LSP according to the egress CN address in the QoS resource request, i.e., BR10, and the Home ER of the destination user identified by the destination user's IP address contained in the QoS resource request. And then, the destination bearer network resource manager allocates resources for the user on the selected LSP.

Obviously, similar to Step 302, in this step, when there is a special routing-policy demand in the local domain, an intra-domain route identity can be obtained by querying the intra-domain route analysis table, then an intra-domain sub-route identity could be obtained based on the intra-domain route identity, and thereafter, an LSP could be selected based on the obtained intra-domain sub-route identity. The difference between this process and Step 302 is that in this process, the egress router of the inter-domain LSP in the QoS resource request is used as the ER the source user belongs to during the query of the intra-domain route analysis table.

After Step 312, the whole process of route selection and resource allocation from the ER1 covered by the source bearer network resource manager to the ER2 covered by the destination bearer network resource manager has been accomplished.

As seen from the above description of the embodiments of the invention, the operators may be able to allocate resources according to routing policy by the following process: when receiving a QoS resource request and allocating resources, the bearer network resource manager selects a sub-route according to a pre-configured inter-domain routing policy, selects an LSP according to the service information and the LSP attributes configured in the sub-route, and then allocates resources on the selected LSP. Moreover, by determining both the inter-domain routing policy and all the corresponding sub-routes according to the service information, it is possible to apply different routing policies to different services and plan the network according to the specific service, which increases the rationality of network planning. Furthermore, through selecting an LSP according to the LSP attributes set in the sub-route, it is possible to allocate resources on the LSP with special attributes in the resource allocation for a specific service, and it is possible to make a specific service pass a specific network node by setting the attribute of LSP as a specific connection node and selecting the LSP passing this connection node when allocating resources for the service. What is more, during the resource allocation, by selecting a sub-route according to an intra-domain routing policy, selecting an LSP based on the LSP attributes in the sub-route and the service information, and then allocating resources on the selected LSP, it is possible to allocate resources within a local domain according to a routing policy.

During the specific implementation of this invention, proper improvements can be made on the method in accordance with the invention so as to accommodate the needs of specific situations. Therefore, it is easy to understand that the embodiments based upon the invention are just for giving demonstrations rather than limiting the protection scope of the invention.

## Claims

1. A method for allocating bearer network resources, **characterized in that** the method is implemented in at least one bearer network resource manager, each of which corresponds to a domain, the method comprising:
upon receiving a QoS resource request, each bearer network resource manager deciding whether the destination user of the QoS resource request is an intra-domain user, if the destination user is the intra-domain user, selecting an intra-domain LSP of at least one hop, allocating resources on the selected intra-domain LSP, and terminating the current procedure (312); and
if the destination user is not the intra-domain user, performing the following process:
the bearer network resource manager selecting an inter-domain sub-route according to a pre-configured inter-domain routing policy and the service information contained in the QoS resource request (303) (308), determining an LSP attribute for the inter-domain sub-route, and selecting an inter-domain LSP between the bearer network resource manager and the adjacent downstream bearer network resource manager thereof according to the determined LSP attribute and the service information contained in the QoS resource request (304) (309), and allocating resources on the selected inter-domain LSP;
selecting an intra-domain LSP of at least one hop, and allocating resources on the selected intra-domain LSP (305) (310); and
sending the QoS resource request containing the information of the selected inter-domain LSP to the downstream bearer network resource manager, to which the egress router of the selected inter-domain LSP belongs (306) (311).

2. The method according to Claim 1,
wherein if the destination user is the intra-domain user, selecting the intra-domain LSP of at least one hop comprises:
selecting the intra-domain LSP according to service information contained in the QoS resource request if the bearer network resource manager is the source bearer network resource manager, and
selecting the intra-domain LSP according to the service information and information of inter-domain LSP contained in the QoS resource request if the bearer network resource manager is not the source bearer network resource manager;
wherein if the destination user is not the intra-domain user, selecting the intra-domain LSP of at least one hop comprises:
selecting the intra-domain LSP according to the service information contained in the QoS resource request and information of the selected inter-domain LSP if the bearer network resource manager is the source bearer network resource manager; and
selecting the intra-domain LSP according to the information of inter-domain LSP contained in the QoS resource request and the information of the selected inter-domain LSP if the bearer network resource manager is not the source bearer network resource manager.

3. The method according to Claim 1, wherein the service information contained in the QoS resource request is, network address information of the destination user.

4. The method according to Claim 3, wherein selecting an inter-domain sub-route according to the pre-configured inter-domain routing policy and the network address information of the destination user comprises:
selecting an inter-domain routing policy corresponding to the network address information of the destination user from the correspondence relationship of the network address information of users and inter-domain routing policies (302) (307), and
selecting an inter-domain sub-route from the corresponding relationship of the inter-domain routing policies and inter-domain sub-routes according to the selected inter-domain routing policy (303) (308).

5. The method according to Claim 4, wherein, the LSP attribute is for describing at least one common route node the LSP should pass; the correspondence relationship of a sub-route identity, a common intra-domain route node, and a common extra-domain route node is configured in the bearer network resource manager;
determining an LSP attribute for the inter-domain sub-route and selecting an inter-domain LSP between the bearer network resource manager and the adjacent downstream bearer network resource manager thereof according to the determined LSP attribute and the network address information of the destination user contained in the QoS resource request, comprises:
Step 1) determining the common intra-domain route node and common extra-domain route node corresponding to the identity of the selected sub-route, searching an LSP, the ingress of which is the common intra-domain route node and the egress of which is the common extra-domain route node; if the LSP can be searched out, determining the LSP as the inter-domain LSP; and if the LSP can not be searched out, selecting a new inter-domain sub-route from the corresponding relationship of the inter-domain routing policies and inter-domain sub-routes according to the selected inter-domain routing policy, and performing Step 1).

6. The method according to Claims 4 or 5, wherein, the correspondence relationship of network address information of a user, a Home type of the user, an intra-domain Home edge router, and an inter-domain route identity, and the correspondence relationship of the inter-domain route identity, the routing policy, and the sub-route identity are configured in the bearer network resource manager, wherein, the Home type of the user is used for indicating whether the user is an intra-domain user;
deciding whether the destination user of the QoS resource request is an intra-domain user, comprises: determining the Home type of the destination user according to the network address information of the destination user, and deciding whether the destination user is an intra-domain user according to the determined Home type;
selecting an inter-domain routing policy corresponding to the network address information of the destination user from the correspondence relationship of the network address information of users and inter-domain routing policies, comprises: determining the inter-domain identity corresponding to the network address information of the destination user, and selecting the inter-domain route policy corresponding to the determined inter-domain identity (302) (307); and
selecting an inter-domain sub-route from the corresponding relationship of the inter-domain routing policies and inter-domain sub-routes according to the selected inter-domain, routing policy, comprises: selecting the sub-route identity corresponding to the selected inter-domain route policy as the identity of the inter-domain sub-route (303) (308).

7. The method according to Claim 6, wherein the intra-domain common route nodes is an intra-domain Trunk Provide Edge (TPE), and the extra-domain common route nodes is an extra-domain TPE.

8. The method according to Claim 2, wherein the service information contained in the QoS resource request includes: network address information of the destination user and the network address information of the source user; the bearer network resource manager is the source bearer network resource manager;
the intra-domain LSP being selected according to the service information contained in the QoS resource request, comprises: determining an intra-domain routing policy according to the network address information of the destination user, searching out a set of intra-domain LSPs according to the network address information of the destination user and source user, and selecting the intra-domain LSP of at least one hop from the set of intra-domain LSPs according to the determined intra-domain routing policy; or, searching out the intra-domain LSP of at least one hop according to the network address information of the destination user and source user (312); and
the intra-domain LSP being selected according to the service information contained in the QoS resource request and information of the selected inter-domain LSP, comprises: determining an intra-domain routing policy according to the information of the selected inter-domain LSP, searching out a set of intra-domain LSPs according to the network address information of the source user and the information of the selected inter-domain LSP (312), and selecting the intra-domain LSP of at least one hop from the set of intra-domain LSPs according to the intra-domain routing policy; or, searching out the intra-domain LSP of at least one hop according to the network address information of the source user and the information of the selected inter-domain LSP.

9. The method according to Claim 2, wherein the service information contained in the QoS resource request includes: network address information of the destination user and the network address information of the source user; the bearer network resource manager is not the source bearer network resource manager;
the intra-domain LSP being selected according to the information of inter-domain LSP contained in the QoS resource request and the information of the selected inter-domain LSP, comprises: determining an intra-domain routing policy according to the information of the selected inter-domain LSP, searching out a set of intra-domain LSPs according to the information of the inter-domain LSP contained in the QoS resource request and information of the selected inter-domain LSP, and selecting the intra-domain LSP of at least one hop from the set of intra-domain LSPs according to the determined intra-domain routing policy; or, searching out the intra-domain LSP of at least one hop according to the information of the inter-domain LSP contained in the QoS resource request and information of the selected inter-domain LSP; and
the intra-domain LSP being selected according to the service information and information of the inter-domain LSP contained in the QoS resource request, comprises: determining an intra-domain routing policy according to the network address information of the destination user, searching out a set of intra-domain LSPs according to the network address information of the destination user and the information of the inter-domain LSP contained in the QoS resource request, and selecting the intra-domain LSP of at least one hop from the set of intra-domain LSPs according to the intra-domain routing policy; or, searching out the intra-domain LSP of at least one hop according to the network address information of the destination user and the information of the inter-domain LSP contained in the QoS resource request (312).

10. The method according to Claims 8 or 9, wherein, the correspondence relationship of network address information of a user and an intra-domain route identity, and the correspondence relationship of the intra-domain route identity and a routing policy, are configured in the bearer network resource manager;
determining the intra-domain routing policy according to the network address information of the destination user, comprises: determining an intra-domain route identity corresponding to the network address information of the destination user, and determining the intra-domain routing policy corresponding to the intra-domain route identity; and
determining an intra-domain routing policy according to the information of the selected inter-domain LSP, comprises: determining an intra-domain route identity corresponding to the address of the ingress router of the selected inter-domain LSP, and determining the intra-domain routing policy corresponding to the intra-domain route identity.

11. The method according to Claim 8, wherein,
searching out the set of intra-domain LSPs according to the network address information of the destination user and source user, comprises: determining the Home edge router of the destination user according to the network address information of the destination user, determining the Home edge router of the source user according to the network address information of the source user, and searching out the set of intra-domain LSPs, wherein, the ingress of each LSP in the set of intra-domain LSPs is the Home edge router of the source user and the egress of each LSP in the set of intra-domain LSPs is the Home edge router of the destination user; and
searching out the set of intra-domain LSPs according to the network address information of the source user and the information of the selected inter-domain LSP, comprises: determining the Home edge router of the destination user according to the ingress address of the selected inter-domain LSP, determining the Home edge router of the source user according to the network address information of the source user, and searching out the set of intra-domain LSPs, wherein, the ingress of each LSP in the set of intra-domain LSPs is the Home edge router of the source user and the egress of each LSP in the set of intra-domain LSPs is the Home edge router of the destination user.

12. The method according to Claims 9, wherein
searching out the set of intra-domain LSPs according to the information of the inter-domain LSP contained in the QoS resource request and information of the selected inter-domain LSP, comprises: determining the Home edge router of the destination user according to the ingress address of the selected inter-domain LSP, determining the Home edge router of the source user according to the egress address of the inter-domain LSP contained in the QoS resource request, and searching out the set of intra-domain LSPs, wherein, the ingress of each LSP in the set of intra-domain LSPs is the Home edge router of the source user and the egress of each LSP in the set of intra-domain LSPs is the Home edge router of the destination user; and
searching out the set of intra-domain LSPs according to the network address information of the destination user and the information of the inter-domain LSP contained in the QoS resource request, comprises: determining the Home edge router of the destination user according to the network address information of the destination user, determining the Home edge router of the source user according to the egress address of the inter-domain LSP contained in the QoS resource request, and searching out the set of intra-domain LSPs, wherein, the ingress of each LSP in the set of intra-domain LSPs is the Home edge router of the source user and the egress of each LSP in the set of intra-domain LSPs is the Home edge router of the destination user.

## Patentansprüche

1. Verfahren zum Zuweisen von Bearer-Network (Trägemetz) Ressourcen, **dadurch gekennzeichnet, daß** das Verfahren in mindestens einem Bearer-Network-Ressourcenmanager implementiert ist, von denen jeder einem Domain entspricht, wobei das Verfahren folgendes umfaßt:
bei Empfang einer Dienstgüteressourcenanforderung entscheidet jeder Bearer-Network-Ressourcenmanager, ob der Zielbenutzer der Dienstgüteressourcenanforderung ein Intra-Domain-Benutzer ist, falls der Zielbenutzer der Intra-Domain-Benutzer ist, Wählen eines Intra-Domain-LSP von mindestens einem Hop, Zuweisen von Ressourcen an dem ausgewählten Intra-Domain-LSP und Abschließen der gegenwärtigen Prozedur (312); und
falls der Zielbenutzer nicht der Intra-Domain-Benutzer ist, Durchführen des folgenden Prozesses:
der Bearer-Network-Ressourcenmanager wählt einen Inter-Domain-Teilleitweg entsprechend einer vorkonfigurierten Inter-Domain-Leitwegführungsregel und der Dienstinformationen, die in der Dienstgüteressourcenanforderung (303) (308) enthalten sind, bestimmt ein LSP-Attribut für den Inter-Domain-Teilleitweg und wählt ein Inter-Domain-LSP zwischen dem Bearer-Network-Ressourcenmanager und dem benachbarten nachgeschalteten Bearer-Network-Ressourcenmanager davon gemäß dem bestimmten LSP-Attribut und den Dienstinformationen, die in der Dienstgüteressourcenanforderung (304) (309) enthalten sind, und weist Ressourcen auf dem gewählten Inter-Domain-LSP zu;
Wählen eines Intra-Domain-LSP von mindestens einem Hop und Zuweisen von Ressourcen auf dem gewählten Intra-Domain-LSP (305) (310) und
Senden der die Informationen des gewählten Inter-Domain-LSP enthaltenden Dienstgüteressourcenanforderung an den nachgeschalteten Bearer-Network-Ressourcenmanager, zu dem der Egress-Router des gewählten Inter-Domain-LSP gehört (306) (311).

2. Verfahren nach Anspruch 1,
wobei, falls der Zielbenutzer der Intra-Domain-Benutzer ist, das Wählen des Intra-Domain-LSP von mindestens einem Hop folgendes umfaßt:
Wählen des Intra-Domain-LSP gemäß in der Dienstgüteressourcenanforderung enthaltenen Dienstinformationen, falls der Bearer-Network-Ressourcenmanager der Quell-Bearer-Network-Ressourcenmanager ist, und
Wählen des Intra-Domain-LSP gemäß den in der Dienstgüteressourcenanforderung enthaltenen Dienstinformationen und Informationen von Inter-Domain-LSP, falls der Bearer-Network-Ressourcenmanager nicht der Quell-Bearer-Network-Ressourcenmanager ist;
wobei, falls der Zielbenutzer nicht der Intra-Domain-Benutzer ist, das Wählen des Intra-Domain-LSP von mindestens einem Hop folgendes umfaßt:
Wählen des Intra-Domain-LSP gemäß den in der Dienstgüteressourcenanforderung enthaltenen Dienstinformationen und Informationen des ausgewählten Inter-Domain-LSP, falls der Bearer-Network-Ressourcenmanager der Quell-Bearer-Network-Ressourcenmanager ist; und
Wählen des Intra-Domain-LSP gemäß den in der Dienstgüteressourcenanforderung enthaltenen Informationen des Inter-Domain-LSP und den Informationen des gewählten Inter-Domain-LSP, falls der Bearer-Network-Ressourcenmanager nicht der Quell-Bearer-Network-Ressourcenmanager ist.

3. Verfahren nach Anspruch 1, wobei die in der Dienstgüteressourcenanforderung enthaltenen Dienstinformationen Netzwerkadressinformationen des Zielbenutzers sind.

4. Verfahren nach Anspruch 3, wobei das Wählen eines Inter-Domain-Teilleitwegs gemäß der vorkonfigurierten Inter-Domain-Leitwegführungsregel und der Netzwerkadressinformationen des Zielbenutzers folgendes umfaßt:
Wählen einer Inter-Domain-Leitwegführungsregel entsprechend den Netzwerkadressinformationen des Zielbenutzers von der Entsprechungsbeziehung der Netzwerkadressinformationen von Benutzern und Inter-Domain-Leitwegsführungsregeln (302) (307), und
Wählen eines Inter-Domain-Teilleitwegs aus der entsprechenden Beziehung der Inter-Domain-Leitwegführungsregeln und Inter-Domain-Teilleitwegen gemäß der gewählten Inter-Domain-Leitwegführungsregel (303) (308).

5. Verfahren nach Anspruch 4, wobei das LSP-Attribut zum Beschreiben mindestens eines gemeinsamen Leitwegknotens bestimmt ist, den das LSP passieren sollte; die Entsprechungsbeziehung einer Teilleitwegsidentität, eines gemeinsamen Intra-Domain-Leitwegknotens und eines gemeinsamen Extra-Domain-Leitwegknotens in dem Bearer-Network-Ressourcenmanager konfiguriert ist;
Bestimmen eines LSP-Attributs für den Inter-Domain-Teilleitweg und Wählen eines Inter-Domain-LSP zwischen dem Bearer-Network-Ressourcenmanager und dem benachbarten nachgeschalteten Bearer-Network-Ressourcenmanager davon gemäß dem bestimmten LSP-Attribut und den in der Dienstgüteressourcenanforderung enthaltenen Netzwerkadressinformationen des Zielbenutzers folgendes umfaßt:
Schritt 1) Bestimmen des gemeinsamen Intra-Domain-Leitwegknotens und gemeinsamen Extra-Domain-Leitwegknotens entsprechend der Identität des gewählten Teilleitwegs, Suchen eines LSP, dessen Ingress der gemeinsame Intra-Domain-Leitwegknoten und dessen Egress der gemeinsame Extra-Domain-Leitwegknoten ist; falls der LSP ausgesucht werden kann, Bestimmen des LSP als das Inter-Domain-LSP; und falls das LSP nicht ausgesucht werden kann, Wählen eines neuen Inter-Domain-Teilleitwegs aus der entsprechenden Beziehung der Inter-Domain-Leitwegführungsregeln und Inter-Domain-Teilleitwegen entsprechend der Inter-Domain-Leitwegführungsregel und Ausführung von Schritt ausgewählten 1).

6. Verfahren nach Anspruch 4 oder 5, wobei die Entsprechungsbeziehung von Netzwerkadressinformationen eines Benutzers, eines Heimtyps des Benutzers, eines Intra-Domain-Heim-Edge-Routers und einer Inter-Domain-Leitwegsidentität und die Entsprechungsbeziehung der Inter-Domain-Leitwegidentität, der Leitwegführungsregel und der Teilleitwegsidentität in dem Bearer-Network-Ressourcenmanager konfiguriert sind, wobei der Heimtyp des Benutzers zum Anzeigen verwendet wird, ob der Benutzer ein Intra-Domain-Benutzer ist;
wobei Entscheiden, ob der Zielbenutzer der Dienstgüteressourcenanforderung ein Intra-Domain-Benutzer ist, folgendes umfaßt: Bestimmen des Heimtyps des Zielbenutzers gemäß den Netzwerkadressinformationen des Zielbenutzers und Entscheiden, ob der Zielbenutzer ein Intra-Domain-Benutzer gemäß dem bestimmten Heimtyp ist;
wobei Wählen einer Inter-Domain-Leitwegführungsregel entsprechend den Netzwerkadressinformationen des Zielbenutzers aus der Entsprechungsbeziehung der Netzwerkadressinformationen von Benutzern und Inter-Domain-Leitwegführungsregeln, folgendes umfaßt: Bestimmen der Inter-Domain-Identität entsprechend den Netzwerkadressinformationen des Zielbenutzers und Wählen der Inter-Domain-Leitwegführungsregel entsprechend der bestimmten Inter-Domain-Identität (302) (307); und
wobei Wählen eines Inter-Domain-Teilleitwegs aus der entsprechenden Beziehung der Inter-Domain-Leitwegführungsregeln und Inter-Domain-Teilleitwegen gemäß der gewählten Inter-Domain-Leitwegführungsregel folgendes umfaßt: Wählen der Teilleitwegsidentität entsprechend der gewählten Inter-Domain-Leitwegführungsregel als die Identität des Inter-Domain-Teilleitwegs (303) (308).

7. Verfahren nach Anspruch 6, wobei die gemeinsamen Intra-Domain-Leitwegknoten ein Intra-Domain-Trunk-Provide-Edge (TPE) sind und die gemeinsamen Extra-Domain-Leitwegknoten ein Extra-Domain-TPE sind.

8. Verfahren nach Anspruch 2, wobei die in der Dienstgüteressourcenanforderung enthaltenen Dienstinformationen folgendes beinhalten: Netzwerkadressinformationen des Zielbenutzers und die Netzwerkadressinformationen des Quellbenutzers; der Bearer-Network-Ressourcenmanager ist der Quell-Bearer-Network-Ressourcenmanager;
wobei das Intra-Domain-LSP, das gemäß der in der Dienstgüteressourcenanforderung enthaltenen Dienstinformationen ausgewählt wird, folgendes umfaßt: Bestimmen einer Intra-Domain-Leitwegführungsregel gemäß der Netzwerkadressinformationen des Zielbenutzers, Aussuchen einer Menge von Intra-Domain-LSPs gemäß den Netzwerkadressinformationen des Zielbenutzers und Quellbenutzers und Wählen des Intra-Domain-LSP von mindestens einem Hop von der Menge von Intra-Domain-LSPs gemäß der bestimmten Intra-Domain-Leitwegführungsregel oder Aussuchen des Intra-Domain-LSP von mindestens einem Hop gemäß den Netzwerkadressinformationen des Zielbenutzers und Quellbenutzers (312) und
wobei das Intra-Domain-LSP, das gemäß den in der Dienstgüteressourcenanforderung enthaltenen Dienstinformationen und Informationen des gewählten Inter-Domain-LSP gewählt wird, folgendes umfaßt: Bestimmen einer Intra-Domain-Leitwegführungsregel gemäß den Informationen des ausgewählten Inter-Domain-LSP, Aussuchen einer Menge von Intra-Domain-LSPs gemäß den Netzwerkadressinformationen des Quellbenutzers und den Informationen des gewählten Inter-Domain-LSP (312) und Wählen des Intra-Domain-LSP von mindestens einem Hop von der Menge von Intra-Domain-LSPs gemäß der Intra-Domain-Leitwegführungsregel oder Aussuchen des Intra-Domain-LSP von mindestens einem Hop gemäß den Netzwerkadressinformationen des Quellbenutzers und den Informationen des ausgewählten Inter-Domain-LSP.

9. Verfahren nach Anspruch 2, wobei die in der Dienstgüteressourcenanforderung enthaltenen Dienstinformationen folgendes beinhalten: Netzwerkadressinformationen des Zielbenutzers und die Netzwerkadressinformationen des Quellbenutzers; der Bearer-Network-Ressourcenmanager ist nicht der Quell-Bearer-Network-Ressourcenmanager;
wobei das Intra-Domain-LSP, das gemäß den in der Dienstgüteressourcenanforderung enthaltenen Informationen des Inter-Domain-LSP und den Informationen des ausgewählten Inter-Domain-LSP ausgewählt wird, folgendes umfaßt: Bestimmen einer Intra-Domain-Leitwegführungsregel gemäß den Informationen des ausgewählten Inter-Domain-LSP, Aussuchen einer Menge von Intra-Domain-LSPs gemäß den in der Dienstgüteressourcenanforderung enthaltenen Informationen des Inter-Domain-LSP und Informationen des ausgewählten Inter-Domain-LSP und Wählen des Intra-Domain-LSP von mindestens einem Hop aus der Menge von Intra-Domain-LSPs gemäß der bestimmten Intra-Domain-Leitwegführungsregel oder Aussuchen des Intra-Domain-LSP von mindestens einem Hop gemäß den in der Dienstgüteressourcenanforderung enthaltenen Informationen des Inter-Domain-LSP und Informationen des ausgewählten Inter-Domain-LSP; und
wobei das Intra-Domain-LSP, das gemäß den Dienstinformationen und Informationen des Inter-Domain-LSP, die in der Dienstgüteressourcenanforderung enthalten sind, ausgewählt wird, folgendes umfaßt: Bestimmen einer Intra-Domain-Leitwegführungsregel gemäß den Netzwerkadressinformationen des Zielbenutzers, Aussuchen einer Menge von Intra-Domain-LSPs gemäß den Netzwerkadressinformationen des Zielbenutzers und den Informationen des Inter-Domain-LSP, die in der Dienstgüteressourcenanforderung enthalten sind, und Wählen des Intra-Domain-LSP von mindestens einem Hop aus der Menge von Intra-Domain-LSPs gemäß der Intra-Domain-Leitwegführungsregel oder Aussuchen des Intra-Domain-LSP von mindestens einem Hop gemäß den Netzwerkadressinformationen des Zielbenutzers und den Informationen des Inter-Domain-LSP, die in der Dienstgüteressourcenanforderung (312) enthalten sind.

10. Verfahren nach Anspruch 8 oder 9, wobei die Entsprechungsbeziehung von Netzwerkadressinformationen eines Benutzers und einer Intra-Domain-Leitwegsidentität und die Entsprechungsbeziehung der Intra-Domain-Leitwegsidentität und eine Leitwegführungsregel in dem Bearer-Network-Ressourcenmanager konfiguriert werden;
wobei Bestimmen der Intra-Domain-Leitwegführungsregel gemäß den Netzwerkadressinformationen des Zielbenutzers folgendes umfaßt: Bestimmen einer Intra-Domain-Leitwegsidentität entsprechend den Netzwerkadressinformationen des Zielbenutzers und Bestimmen der Intra-Domain-Leitwegführungsregel entsprechend der Intra-Domain-Leitwegsidentität; und
wobei Bestimmen einer Intra-Domain-Leitwegführungsregel gemäß den Informationen des ausgewählten Inter-Domain-LSP folgendes umfaßt: Bestimmen einer Intra-Domain-Leitwegsidentität entsprechend der Adresse des Ingress-Routers des gewählten Inter-Domain-LSP und Bestimmen der Intra-Domain-Leitwegführungsregel entsprechend der Intra-Domain-Leitwegsidentität.

11. Verfahren nach Anspruch 8, wobei
Aussuchen der Menge von Intra-Domain-LSPs gemäß den Netzwerkadressinformationen des Zielbenutzers und Quellbenutzers folgendes umfaßt: Bestimmen des Heim-Edge-Routers des Zielbenutzers gemäß den Netzwerkadressinformationen des Zielbenutzers, Bestimmen des Heim-Edge-Routers des Quellbenutzers gemäß den Netzwerkadressinformationen des Quellbenutzers und Aussuchen der Menge von Intra-Domain-LSPs, wobei der Ingress jedes LSP in der Menge von Intra-Domain-LSPs der Heim-Edge-Router des Quellbenutzers ist und der Egress jedes LSP in der Menge von Intra-Domain-LSPs der Heim-Edge-Router des Zielbenutzers ist; und
wobei Aussuchen der Menge von Intra-Domain-LSPs gemäß den Netzwerkadressinformationen des Quellbenutzers und den Informationen des gewählten Inter-Domain-LSP folgendes umfaßt: Bestimmen des Heim-Edge-Routers des Zielbenutzers gemäß der Ingress-Adresse des gewählten Inter-Domain-LSP, Bestimmen des Heim-Edge-Routers des Quellbenutzers gemäß den Netzwerkadressinformationen des Quellbenutzers und Aussuchen der Menge von Intra-Domain-LSPs, wobei der Ingress jedes LSP in der Menge von Intra-Domain-LSPs der Heim-Edge-Router des Quellbenutzers ist und der Egress jedes LSP in der Menge von Intra-Domain-LSPs der Heim-Edge-Router des Zielbenutzers ist.

12. Verfahren nach Anspruch 9, wobei
Aussuchen der Menge von Intra-Domain-LSPs gemäß den in der Dienstgüteressourcenanforderung enthaltenen Informationen des Inter-Domain-LSP und Informationen des gewählten Inter-Domain-LSP folgendes umfaßt: Bestimmen des Heim-Edge-Routers des Zielbenutzers gemäß der Ingress-Adresse des gewählten Inter-Domain-LSP, Bestimmen des Heim-Edge-Routers des Quellbenutzers gemäß der Egress-Adresse des Inter-Domain-LSP, die in der Dienstgüteressourcenanforderung enthalten ist, und Aussuchen der Menge von Intra-Domain-LSPs, wobei der Ingress jedes LSP in der Menge von Intra-Domain-LSPs der Heim-Edge-Router des Quellbenutzers ist und der Egress jedes LSP in der Menge von Intra-Domain-LSPs der Heim-Edge-Router des Zielbenutzers ist; und
wobei Aussuchen der Menge von Intra-Domain-LSPs gemäß den Netzwerkadressinformationen des Zielbenutzers und den Informationen des Inter-Domain-LSP, die in der Dienstgüteressourcenanforderung enthalten sind, folgendes umfaßt: Bestimmen des Heim-Edge-Routers des Zielbenutzers gemäß den Netzwerkadressinformationen des Zielbenutzers, Bestimmen des Heim-Edge-Routers des Quellbenutzers gemäß der Egress-Adresse der Inter-Domain-LSP, die in der Dienstgüteressourcenanforderung enthalten ist, und Aussuchen der Menge von Intra-Domain-LSPs, wobei der Ingress jedes LSP in der Menge von Intra-Domain-LSPs der Heim-Edge-Router des Quellbenutzers ist und der Egress jedes LSP in der Menge von Intra-Domain-LSPs der Heim-Edge-Router des Zielbenutzers ist.

## Revendications

1. Procédé d'allocation de ressources de réseau support, **caractérisé en ce que** le procédé est mis en oeuvre dans au moins un gestionnaire de ressources de réseau support, dont chacun correspond à un domaine, le procédé comprenant :
sur réception d'une requête de ressource QoS, par chaque gestionnaire de ressources de réseau support la décision si l'utilisateur destinataire de la requête de ressource QOS est ou non un utilisateur intra-domaine, si l'utilisateur destinataire est l'utilisateur intra-domaine, la sélection d'un LSP intra-domaine d'au moins un bond, l'allocation de ressources sur le LSP intra-domaine sélectionné, et l'arrêt de la procédure courante (312) ; et
si l'utilisateur destinataire n'est pas l'utilisateur intra-domaine, l'exécution du processus suivant :
par le gestionnaire de ressources de réseau support la sélection d'une sous-route inter-domaines en fonction d'une politique de routage inter-domaines pré-configurée, et des informations de service contenues dans la requête de ressources QoS (303) (308), la détermination d'un attribut LSP de la sous-route inter-domaines, et la sélection d'un LSP inter-domaines entre le gestionnaire de ressources de réseau support et son gestionnaire de ressources de réseau support aval adjacent en fonction de l'attribut LSP déterminé et des informations de service contenues dans la requête de ressources QoS (304) (309), et l'allocation de ressources sur le LSP inter-domaines sélectionné ;
la sélection d'un LSP intra-domaine d'au moins un bond, et l'allocation de ressources sur le LSP intra-domaine sélectionné (305) (310) ; et
l'envoi de la requête de ressources QoS contenant les informations du LSP inter-domaines sélectionné au gestionnaire de ressources de réseau support aval, auquel appartient le routeur de sortie du LSP inter-domaines sélectionné (306) (311).

2. Procédé selon la revendication 1,
dans lequel si l'utilisateur destinataire est l'utilisateur intra-domaine, la sélection du LSP intra-domaine d'au moins un bond comprend :
la sélection du LSP intra-domaine en fonction d'informations de service contenues dans la requête de ressources QoS si le gestionnaire de ressources de réseau support est le gestionnaire de ressources de réseau support source, et
la sélection du LSP intra-domaine en fonction des informations de service et des informations du LSP inter-domaines contenues dans la requête de ressources QoS si le gestionnaire de ressources de réseau support n'est pas le gestionnaire de ressources de réseau support source ;
dans lequel si l'utilisateur destinataire n'est pas l'utilisateur intra-domaine, la sélection du LSP intra-domaine d'au moins un bond comprend :
la sélection du LSP intra-domaine en fonction des informations de service contenues dans la requête de ressources QoS et des informations du LSP inter-domaines sélectionné si le gestionnaire de ressources de réseau support est le gestionnaire de ressources de réseau support source ; et
la sélection du LSP intra-domaine en fonction des informations du LSP inter-domaines contenues dans la requête de ressources QoS et des informations du LSP inter-domaines sélectionné si le gestionnaire de ressources de réseau support n'est pas le gestionnaire de ressources de réseau support source.

3. Procédé selon la revendication 1, dans lequel les informations de service contenues dans la requête de ressources QoS sont les informations d'adresse réseau de l'utilisateur destinataire.

4. Procédé selon la revendication 3, dans lequel la sélection d'une sous-route inter-domaines en fonction de la politique de routage inter-domaines pré-configurée, et des informations d'adresse réseau de l'utilisateur destinataire comprend :
la sélection d'une politique de routage inter-domaines correspondant aux informations d'adresse réseau de l'utilisateur destinataire à partir de la relation de correspondance des informations d'adresse réseau des utilisateurs et des politiques de routage inter-domaines (302) (307), et
la sélection d'une sous-route inter-domaines à partir de la relation correspondante des politiques de routage inter-domaines et des sous-routes inter-domaines en fonction de la politique de routage inter-domaines sélectionnée (303) (308).

5. Procédé selon la revendication 4, dans lequel l'attribut LSP sert à décrire au moins un noeud de route commun par lequel le LSP devrait passer ; la relation de correspondance d'une identité de sous-route, d'un noeud de route intra-domaine commun, et d'un noeud de route extra-domaine commun est configurée dans le gestionnaire de ressources de réseau support ;
la détermination d'un attribut LSP de la sous-route inter-domaines et la sélection d'un LSP inter-domaines entre le gestionnaire de ressources de réseau support et son gestionnaire de ressources de réseau support aval adjacent en fonction de l'attribut LSP déterminé et des informations d'adresse réseau de l'utilisateur destinataire contenues dans la requête de ressources QoS comprennent :
Etape 1) la détermination du noeud de route intra-domaine commun et d'un noeud de route extra-domaine commun correspondant à l'identité de la sous-route sélectionnée, la recherche d'un LSP, dont l'entrée est le noeud de route intra-domaine commun et la sortie est le noeud de route extra-domaine commun ; si le LSP peut être examiné, la détermination du LSP comme LSP inter-domaines ; et si le LSP ne peut pas être examiné, la sélection d'une nouvelle sous-route inter-domaines à partir de la relation correspondante des politiques de routage inter-domaines et des sous-routes inter-domaines en fonction de la politique de routage inter-domaines sélectionnée, et l'exécution de l'Etape 1.

6. Procédé selon la revendication 4 ou 5, dans lequel la relation de correspondance des informations d'adresse réseau d'un utilisateur, un type de Rattachement de l'utilisateur, un routeur de bord de Rattachement intra-domaine, et une identité de route inter-domaines, et la relation de correspondance de l'identité de route inter-domaines, la politique de routage, et l'identité de sous-route sont configurées dans le gestionnaire de ressources de réseau support, dans lequel le type de Rattachement de l'utilisateur sert à indiquer si l'utilisateur est ou non un utilisateur intra-domaine ;
la décision si l'utilisateur destinataire de la requête de ressources QoS est ou non un utilisateur intra-domaine, comprend : la détermination du type de Rattachement de l'utilisateur destinataire en fonction des informations d'adresse réseau de l'utilisateur destinataire, et la décision si l'utilisateur destinataire est ou non un utilisateur intra-domaine en fonction du type de Rattachement déterminé ;
la sélection d'une politique de routage inter-domaines correspondant aux informations d'adresse réseau de l'utilisateur destinataire à partir de la relation de correspondance des informations d'adresse réseau des utilisateurs et des politiques de routage inter-domaines comprend : la détermination de l'identité inter-domaines correspondant aux informations d'adresse réseau de l'utilisateur destinataire, et la sélection de la politique de route inter-domaines correspondant à l'identité inter-domaines déterminée (302) (307) ; et
la sélection d'une sous-route inter-domaines à partir de la relation correspondante des politiques de routage inter-domaines et des sous-routes inter-domaines en fonction de la politique de routage inter-domaines sélectionnée comprend : la sélection de l'identité de sous-route correspondant à la politique de routage inter-domaines sélectionnée comme identité de la sous-route inter-domaines (303) (308).

7. Procédé selon la revendication 6, dans lequel le noeud de route commun intra-domaine est un Bord Fournisseur de Liaison (TPE - Trunk Provide Edge) intra-domaine, et le noeud de route commun extra-domaine est un TPE extra-domaine.

8. Procédé selon la revendication 2, dans lequel les informations de service contenues dans la requête de ressources QoS comportent : des informations d'adresse réseau de l'utilisateur destinataire et les informations d'adresse réseau de l'utilisateur source ; le gestionnaire de ressources de réseau support est le gestionnaire de ressources réseau support source ;
la sélection du LSP intra-domaine en fonction des informations de service contenues dans la requête de ressources QoS comprend : la détermination d'une politique de routage intra-domaine en fonction des informations d'adresse réseau de l'utilisateur destinataire, l'examen d'un ensemble de LSP intra-domaine en fonction des informations d'adresse réseau de l'utilisateur destinataire et de l'utilisateur source, et la sélection du LSP intra-domaine d'au moins un bond dans l'ensemble de LSP intra-domaine en fonction de la politique de routage intra-domaine déterminée ; ou l'examen du LSP intra-domaine d'au moins un bond en fonction des informations d'adresse réseau de l'utilisateur destinataire et de l'utilisateur source (312) ; et
la sélection du LSP intra-domaine en fonction des informations de service contenues dans la requête de ressources QoS et des informations du LSP inter-domaines sélectionné comprend : la détermination d'une politique de routage intra-domaine en fonction des informations du LSP inter-domaines sélectionné, l'examen d'un ensemble de LSP intra-domaine en fonction des informations d'adresse réseau de l'utilisateur source et des informations du LSP inter-domaines sélectionné (312), et la sélection du LSP intra-domaine d'au moins un bond dans l'ensemble de LSP intra-domaine en fonction de la politique de routage intra-domaine ; ou l'examen du LSP intra-domaine d'au moins un bond en fonction des informations d'adresse réseau de l'utilisateur source et des informations du LSP inter-domaines sélectionné.

9. Procédé selon la revendication 2, dans lequel les informations de service contenues dans la requête de ressources QoS comportent : des informations d'adresse réseau de l'utilisateur destinataire et les informations d'adresse réseau de l'utilisateur source ; le gestionnaire de ressources de réseau support n'est pas le gestionnaire de ressources réseau support source ;
la sélection du LSP intra-domaine en fonction des informations du LSP inter-domaines contenues dans la requête de ressources QoS et des informations du LSP inter-domaines sélectionné comprend : la détermination d'une politique de routage intra-domaine en fonction des informations du LSP inter-domaines sélectionné, l'examen d'un ensemble de LSP intra-domaine en fonction des informations du LSP inter-domaines contenues dans la requête de ressources QoS et des informations du LSP inter-domaines sélectionné, et la sélection du LSP intra-domaine d'au moins un bond dans l'ensemble de LSP intra-domaine en fonction de la politique de routage intra-domaine déterminée ; ou l'examen du LSP intra-domaine d'au moins un bond en fonction des informations du LSP inter-domaines contenues dans la requête de ressources QoS et des informations du LSP inter-domaines sélectionné ; et
la sélection du LSP intra-domaine en fonction des informations de service et des informations du LSP inter-domaines contenues dans la requête de ressources QoS comprend : la détermination d'une politique de routage intra-domaine en fonction des informations d'adresse réseau de l'utilisateur destinataire, l'examen d'un ensemble de LSP intra-domaine en fonction des informations d'adresse réseau de l'utilisateur destinataire et des informations du LSP inter-domaines contenues dans la requête de ressources QoS, et la sélection du LSP intra-domaine d'au moins un bond dans l'ensemble de LSP intra-domaine en fonction de la politique de routage intra-domaine ; ou, l'examen du LSP intra-domaine d'au moins un bond en fonction des informations d'adresse réseau de l'utilisateur destinataire et des informations du LSP inter-domaines contenues dans la requête de ressources QoS (312).

10. Procédé selon la revendication 8 ou 9, dans lequel la relation de correspondance des informations d'adresse réseau d'un utilisateur et d'une identité de route intra-domaine, et la relation de correspondance de l'identité de route intra-domaine et d'une politique de routage sont configurées dans le gestionnaire de ressources de réseau support ;
la détermination de la politique de routage intra-domaine en fonction des informations d'adresse réseau de l'utilisateur destinataire comprend : la détermination d'une identité de route intra-domaine correspondant aux informations d'adresse réseau de l'utilisateur destinataire, et la détermination de la politique de routage intra-domaine correspondant à l'identité de route intra-domaine ; et
la détermination de la politique de routage intra-domaine en fonction des informations du LSP inter-domaines sélectionné comprend : la détermination d'une identité de route intra-domaine correspondant à l'adresse du routeur d'entrée du LSP inter-domaines sélectionné, et la détermination de la politique de routage intra-domaine correspondant à l'identité de route intra-domaine.

11. Procédé selon la revendication 8, dans lequel,
l'examen de l'ensemble de LSP intra-domaine en fonction des informations d'adresse réseau de l'utilisateur destinataire et de l'utilisateur source comprend : la détermination du routeur de bord de Rattachement de l'utilisateur destinataire en fonction des informations d'adresse réseau de l'utilisateur destinataire, la détermination du routeur de bord de Rattachement de l'utilisateur source en fonction des informations d'adresse réseau de l'utilisateur source, et l'examen de l'ensemble de LSP intra-domaine, dans lequel l'entrée de chaque LSP dans l'ensemble de LSP intra-domaine est le routeur de bord de Rattachement de l'utilisateur source et la sortie de chaque LSP dans l'ensemble de LSP intra-domaine est le routeur de bord de Rattachement de l'utilisateur destinataire ; et
l'examen de l'ensemble de LSP intra-domaine en fonction des informations d'adresse réseau de l'utilisateur source et des informations du LSP inter-domaines sélectionné comprend : la détermination du routeur de bord de Rattachement de l'utilisateur destinataire en fonction de l'adresse d'entrée du LSP inter-domaines sélectionné, la détermination du routeur de bord de Rattachement de l'utilisateur source en fonction des informations d'adresse réseau de l'utilisateur source, et l'examen de l'ensemble de LSP intra-domaine, dans lequel l'entrée de chaque LSP dans l'ensemble de LSP intra-domaine est le routeur de bord de Rattachement de l'utilisateur source et la sortie de chaque LSP dans l'ensemble de LSP intra-domaine est le routeur de bord de Rattachement de l'utilisateur destinataire.

12. Procédé selon la revendication 9, dans lequel
l'examen de l'ensemble de LSP intra-domaine en fonction des informations du LSP inter-domaines contenues dans la requête de ressources QoS et des informations du LSP inter-domaines sélectionné comprend : la détermination du routeur de bord de Rattachement de l'utilisateur destinataire en fonction de l'adresse d'entrée du LSP inter-domaines sélectionné, la détermination du routeur de bord de Rattachement de l'utilisateur source en fonction de l'adresse de sortie du LSP inter-domaines contenue dans la requête de ressources QoS, et l'examen de l'ensemble de LSP intra-domaine, dans lequel l'entrée de chaque LSP dans l'ensemble de LSP intra-domaine est le routeur de bord de Rattachement de l'utilisateur source et la sortie de chaque LSP dans l'ensemble de LSP intra-domaine est le routeur de bord de Rattachement de l'utilisateur destinataire ; et
l'examen de l'ensemble de LSP intra-domaine en fonction des informations d'adresse réseau de l'utilisateur destinataire et des informations du LSP inter-domaines contenues dans la requête de ressources QoS comprend : la détermination du routeur de bord de Rattachement de l'utilisateur destinataire en fonction des informations d'adresse réseau de l'utilisateur destinataire, la détermination du routeur de bord de Rattachement de l'utilisateur source en fonction de l'adresse de sortie du LSP inter-domaines contenue dans la requête de ressources QoS, et l'examen de l'ensemble de LSP intra-domaine, dans lequel, l'entrée de chaque LSP dans l'ensemble de LSP intra-domaine est le routeur de bord de Rattachement de l'utilisateur source et la sortie de chaque LSP dans l'ensemble de LSP intra-domaine est le routeur de bord de Rattachement de l'utilisateur destinataire.
